# EUROPEAN PATENT APPLICATION

(11) **EP 0 726 291 A1**
(43) Date of publication of application: **14.08.1996**
(21) Application number: 96101750.6
(22) Date of filing: 07.02.1996
(51) Int. Cl.: C08L 23/08, C08L 65/00, C08L 45/00, C08L 51/06

(54) **Cycloolefin resin composition**

(30) Priority: 07.02.1995 JP 19588/95
(71) Applicant: MITSUI PETROCHEMICAL INDUSTRIES, LTD., Tokyo 100 (JP); HOECHST AKTIENGESELLSCHAFT, 65926 Frankfurt am Main (DE)
(72) Inventor: Hirose, Toshiyuki, c/o Mitsui Petrochem Ind, Ltd, Kuga-gun, Yamaguchi 740 (JP); Yamamoto, Yohzoh, c/o Mitsui Petrochem Ind, Ltd, Kuga-gun, Yamaguchi 740 (JP)
(74) Representative: Hansen, Bernd, Dr. Dipl.-Chem.

(57) **Abstract**

The cycloolefin resin composition of the present invention comprises 60 to 90 parts by weight of a cycloolefin resin (A), especially an ethylene/cycloolefin random copolymer, and 10 to 40 parts by weight of an aromatic vinyl/conjugated diene block copolymer and/or a hydrogenation product thereof (B) having a number average molecular weight of 75,000 to 500,000, especially a styrene/butadiene block copolymer and/or a hydrogenation product thereof. Further, the molded article of the present invention is formed from the composition. The composition and the molded article formed therefrom show excellent impact strength and moisture resistance.

## Description

### FIELD OF THE INVENTION

The present invention relates to a cycloolefin resin composition excellent particularly in impact strength and moisture resistance and to a molded product of the composition.

### BACKGROUND OF THE INVENTION

Polycarbonate, ABS resin, etc. are conventionally known as synthetic resins of high rigidity and high impact strength. Although the polycarbonate is excellent in rigidity, heat resistance, heat aging resistance and impact resistance, it has problems of poor chemical resistance and high water absorption. The ABS resin is excellent in mechanical property, but it is poor in chemical resistance, heat resistance and weathering resistance.

On the other hand, polyolefins such as polyethylene are known as resins excellent not only in chemical resistance and solvent resistance but also in transparency, moldability, electrical properties and mechanical strength. Further, as the resins improved in the rigidity and heat resistance of the polyolefins, cycloolefin resins such as random copolymers of ethylene and bulky cycloolefins are proposed in Japanese Patent Laid-Open Publication No. 168708/1985.

The cycloolefin resins are excellent in rigidity and heat resistance as well as in transparency, moldability, electrical properties and mechanical strength, but they are brittle and show poor impact resistance, and hence molded products produced by injection molding or extrusion molding, e.g., films, sheets and containers, are desired to be further improved in the impact resistance.

As a composition improved in the impact resistance of the cycloolefin resins, for example, a composition comprising a ring-opening polymer of dicyclopentadiene or a hydrogenation product thereof, i.e., amorphous polyolefin, and a hydrogenated diene copolymer is proposed in Japanese Patent Laid-Open Publication No. 145462/1994. Also the present applicant has proposed, in Japanese Patent Laid-Open Publication No. 256548/1989, a composition comprising a random copolymer of ethylene and bulky cycloolefin and an aromatic vinyl/conjugated diene block copolymer or a hydrogenation product thereof.

Under these circumstances, the present inventors have earnestly studied to pursue cycloolefin resin compositions having high impact resistance without deteriorating the excellent properties inherent in the cycloolefin resins. As a result, they have found that a cycloolefin resin composition comprising a specific cycloolefin resin and an aromatic vinyl/conjugated diene block copolymer having a specific molecular weight is excellent particularly in the impact resistance. Based on this finding, the present invention has been accomplished.

### OBJECT OF THE INVENTION

It is an object of the present invention to provide a cycloolefin resin composition excellent particularly in impact resistance as well as in heat resistance, heat aging resistance, chemical resistance, solvent resistance, dielectric properties, rigidity and moisture resistance, and to provide a molded product of the composition.

### SUMMARY OF THE INVENTION

The cycloolefin resin composition of the present invention comprises:
(A) 60 to 90 parts by weight of at least one cycloolefin resin selected from the group consisting of:
   (A-1) an ethylene/cycloolefin random copolymer of ethylene and a cycloolefin represented by the following formula (I) or (II),
   (A-2) a ring-opening (co)polymer of a cycloolefin represented by the following formula (I) or (II),
   (A-3) a hydrogenation product of the above (A-2), and
   (A-4) a graft modification product of the above (A-1), (A-2) or (A-3); and
(B) 10 to 40 parts by weight of an aromatic vinyl/conjugated diene block copolymer and/or a hydrogenation product thereof having a number average molecular weight of 75,000 to 500,000: 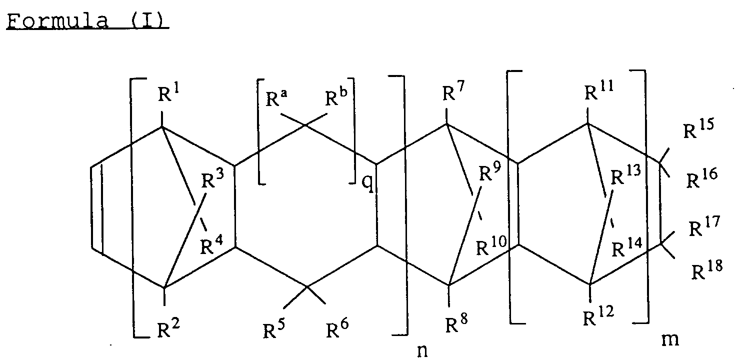 wherein n is 0 or 1, m is 0 or a positive integer, q is 0 or 1 and each of R¹ to R¹⁸, R^{a} and R^{b} independently represents a hydrogen atom, a halogen atom or a hydrocarbon group which may be substituted with halogen atoms, provided that R¹⁵ to R¹⁸ may mutually bond to form a monocyclic or polycyclic ring which may have a double bond, and that a combination of R¹⁵ and R¹⁶ or a combination of R¹⁷ and R¹⁸ may form an alkylidene group; or 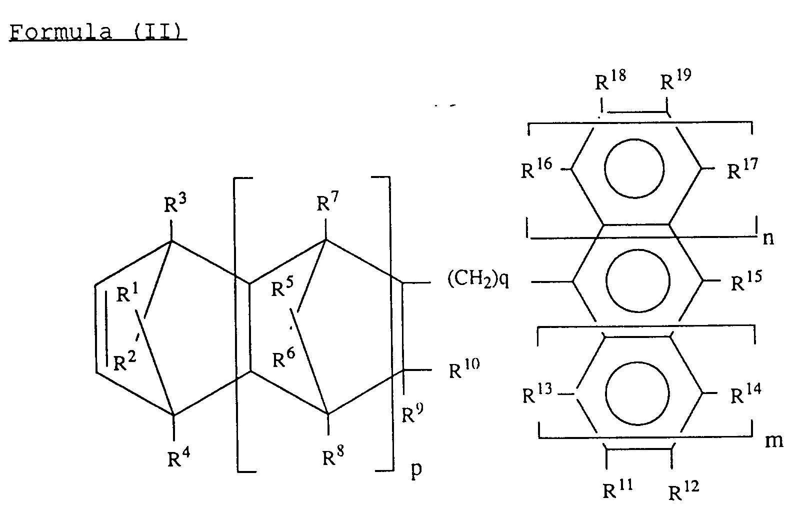 wherein each of p and q is 0 or an integer of 1 or greater, each of m and n is 0, 1 or 2 and each of R¹ to R¹⁹ independently represents a hydrogen atom, a halogen atom, a hydrocarbon group which may be substituted with halogen atoms or an alkoxy group which may be substituted with halogen atoms, provided that a carbon atom with which R⁹ or R¹⁰ bonds and either a carbon atom with which R¹³ bonds or a carbon atom with which R¹¹ bonds may bond with each other directly or through an alkylene group having 1 to 3 carbon atoms and that, when n = m = 0, a combination of R¹⁵ and R¹² or a combination of R¹⁵ and R¹⁹ may mutually bond to form an aromatic monocyclic ring or aromatic polycyclic rings.

The aromatic vinyl/conjugated diene block copolymer and/or a hydrogenation product thereof (B) is preferably a styrene-ethylene/propylene-styrene block copolymer or a styrene-ethylene/butene-styrene block copolymer, and the component (B) has preferably a number average molecular weight of 90,000 to 200,000.

The cycloolefin resin composition of the present invention comprises the above-mentioned specific components, so that it has excellent impact strength and moisture resistance.

The molded article of the present invention is formed from the cycloolefin resin composition.

In the present invention, in case that the molded article is a press molded one, the component (B) contained in the cylcoolefin resin composition may have a number average molecular weight of 50,000 to 500,000.

### DETAILED DESCRIPTION OF THE INVENTION

The cycloolefin resin composition of the present invention will be described in greater detail below.

The cycloolefin resin composition of the present invention comprises a cycloolefin resin (A) and an aromatic vinyl/conjugated diene block copolymer and/or a hydrogenation product thereof (B) having a specific molecular weight.

Each of the components used in the present invention will be described below.

### (A) Cycloolefin Resin

The cycloolefin resin (A) for use in the present invention is selected from among:
(A-1) an ethylene/cycloolefin random copolymer of ethylene and a cycloolefin represented by the following formula (I) or (II),
(A-2) a ring-opening (co)polymer of a cycloolefin represented by the following formula (I) or (II),
(A-3) a hydrogenation product of the above (A-2), and
(A-4) a graft modification product of the above (A-1), (A-2) or (A-3).

The softening temperature (TMA) of the cycloolefin resin (A), as measured by Thermo Mechanical Analyzer, is 60°C or higher, preferably 70 °C to 250 °C, more preferably 100 to 200 °C.

The melt flow rate (MFR) of the cycloolefin resin (A), as measured at 260 °C under a load of 2.16 kg in accordance with ASTM D1238, is in the range of 0.1 to 100 g/10 min, preferably 1 to 50 g/10 min.

The crystallinity of the cycloolefin resin (A), as measured by X-ray diffractometry, is in the range of 0 to 20 %, preferably 0 to 2 %.

The cycloolefin employed to form the cycloolefin resin (A) according to the present invention is represented by the following formula (I) or (II).

### Cycloolefin

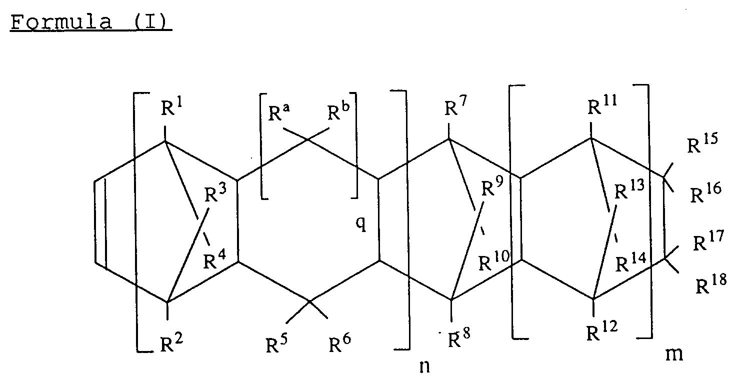

In the above formula (I), n is 0 or 1, m is 0 or a positive integer and q is 0 or 1. When q is 1, the ring represented with the use of q is a 6-membered ring. On the other hand, when q is 0, it is a 5-membered ring.

Each of R¹ to R¹⁸, R^{a} and R^{b} independently represents a hydrogen atom, a halogen atom or a hydrocarbon group.

The halogen atom is selected from among fluorine, chlorine, bromine and iodine atoms.

The hydrocarbon group is generally selected from among alkyl groups each having 1 to 20 carbon atoms, and cycloalkyl and aromatic hydrocarbon groups each having 3 to 15 carbon atoms. Examples of the above alkyl groups include methyl, ethyl, propyl, isopropyl, amyl, hexyl, octyl, decyl, dodecyl and octadecyl groups. An example of the above cycloalkyl group is a cyclohexyl group. Examples of the above aromatic hydrocarbon groups include phenyl and naphthyl groups. These hydrocarbon groups may be those substituted with halogen atoms.

In the above formula (I), each of R¹⁵ to R¹⁸ may mutually bond (cooperate) to form a monocyclic ring or polycyclic rings. The thus formed monocyclic ring or polycyclic rings may have a double bond. Examples of the above monocyclic ring and polycyclic ring groups include the following groups:

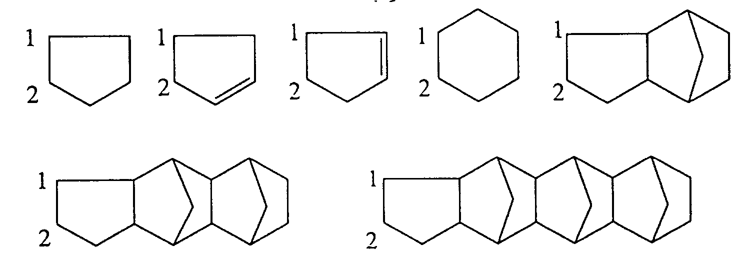

In the above examples of groups, the carbon atoms having numerals 1 and 2 affixed thereto respectively correspond to those with which R¹⁵ (R¹⁶) or R¹⁷ (R¹⁸) bond in the formula (I).

R¹⁵ may cooperate with R¹⁶ or R¹⁷ with R¹⁸ to thereby form an alkylidene group. This alkylidene group generally has 2 to 20 carbon atoms. Examples of the above alkylidene groups include ethylidene, propylidene and isopropylidene groups.

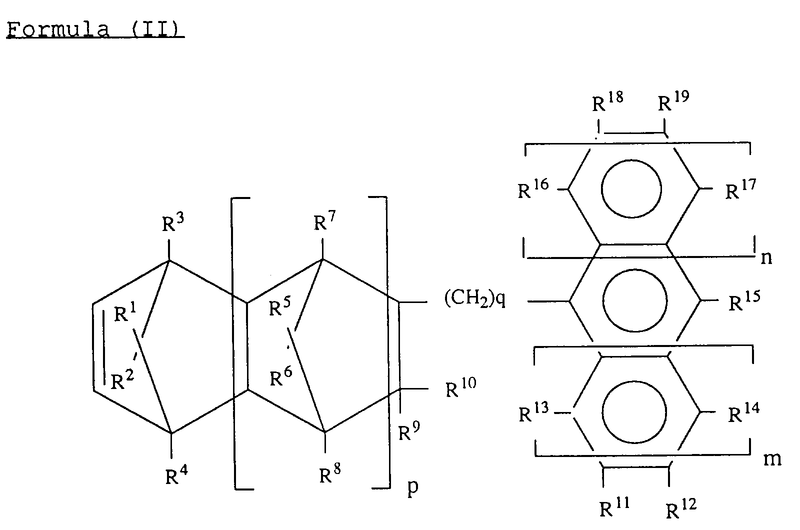

In the above formula (II), each of p and q is 0 or a positive integer, and each of m and n is 0, 1 or 2.

Each of R¹ to R¹⁹ independently represents a hydrogen atom, a halogen atom, a hydrocarbon group or an alkoxy group.

The halogen atom is selected from among those mentioned above with respect to the formula (I).

The hydrocarbon group is generally selected from among alkyl groups each having 1 to 20 carbon atoms, halogenated alkyl groups each having 1 to 20 carbon atoms and cycloalkyl and aromatic hydrocarbon groups each having 3 to 15 carbon atoms. Examples of the above alkyl groups include methyl, ethyl, propyl, isopropyl, amyl, hexyl, octyl, decyl, dodecyl and octadecyl groups. An example of the above cycloalkyl group is a cyclohexyl group. Examples of the above aromatic hydrocarbon groups include aryl and aralkyl groups such as phenyl, tolyl, naphthyl, benzyl and phenylethyl groups.

Examples of the above alkoxy groups include methoxy, ethoxy and propoxy groups.

These hydrocarbon groups and alkoxy groups may be those substituted with a fluorine, chlorine, bromine or iodine atom.

In the above formula (II), the carbon atom with which R⁹ and R¹⁰ bond and either the carbon atom with which R¹³ bonds or the carbon atom with which R¹¹ bonds may bond with each other directly or through an alkylene group having 1 to 3 carbon atoms. When two carbon atoms bond with each other through an alkylene group, either R⁹ cooperates with R¹³ or R¹⁰ with R¹¹ to thereby form an alkylene group selected from among methylene (-CH₂-), ethylene (-CH₂CH₂-) and propylene (-CH₂CH₂CH₂-).

When n = m = 0, a combination of R¹⁵ and R¹² or a combination of R¹⁵ and R¹⁹ may mutually bond to form a monocyclic ring or polycyclic aromatic rings. Examples of the aromatic rings formed by R¹⁵ and R¹² when n = m = 0 are as follows:

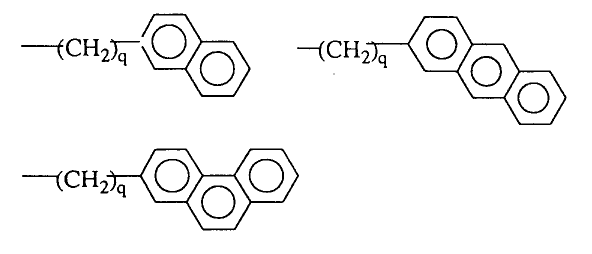

In the above formulae, q has the same meaning as in the formula (II).

Examples of the cycloolefins represented by the formula (I) and (II) include:
bicyclo[2.2.1]-2-heptene (= norbornene) represented by the formula: 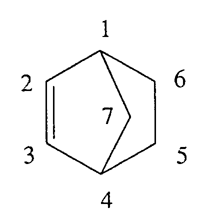 (wherein the numerals 1 to 7 are position numbers of carbons), and
derivatives thereof substituted with hydrocarbon groups. Examples of this hydrocarbon groups include 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl) and 5,6-diphenyl.

Examples of other derivatives include:
bicyclo[2.2.1]-2-heptene derivatives, such as cyclopentadiene-acenaphthylene adducts, 1,4-methano-1,4,4a,9a-tetrahydrofluorene and 1,4-methano-1,4,4a,5,10,10a-hexahydroanthracene;
tricyclo[4.3.0.1^{2,5}]-3-decene derivatives, such as tricyclo[4.3.0.1^{2,5}]-3-decene, 2-methyltricyclo[4.3.0.1^{2,5}]-3-decene and 5-methyltricyclo[4.3.0.1^{2,5}]-3-decene;
tricyclo[4.4.0.1^{2,5}]-3-undecene derivatives, such as tricyclo[4.4.0.1^{2,5}]-3-undecene and 10-methyltricyclo[4.4.0.1^{2,5}]-3-undecene; and
tetracyclo[4.4.0.1^{2,5}.1^{7,10}]-3-dodecene represented by the formula: 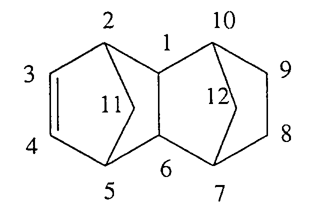 (wherein the numerals 1 to 12 are position numbers of carbons),
and derivatives thereof substituted with hydrocarbon groups. Examples of this hydrocarbon groups include 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl) and 5,6-diphenyl.

Also employable are:
an adduct of cyclopentadiene/acenaphthylene adduct with cyclopentadiene;
pentacyclo[6.5.1.1^{3,6}.0^{2,7}.0^{9,13}]-4-pentadecene and derivatives thereof;
pentacyclo[7.4.0.1^{2,5}.1^{9,12}.0^{8,13}]-3-pentadecene and derivatives thereof;
Pentacyclopentadecadiene compound such as pentacyclo[6.5.1.1^{3,6}.0^{2,7}.0^{9,13}]-4,10-pentadecadiene,
pentacyclo[8.4.0.1^{2,5}.1^{9,12}.0^{8,13}]-3-hexadecene and derivatives thereof;
pentacyclo[6.6.1.1^{3,6}.0^{2,7}.0^{9,14}]-4-hexadecene and derivatives thereof;
hexacyclo[6.6.1.1^{3,6}.1^{10,13}.0^{2,7}.0^{9,14}]-4-heptadecene and derivatives thereof;
heptacyclo[8.7.0.1^{2,9}.1^{4,7}.1^{11,17}.0^{3,8}.0^{12,16}]-5-eicosene and derivatives thereof;
heptacyclo[8.8.0.1^{2,9}.1^{4,7}.1^{11,18}.0^{3,8}.0^{12,17}]-5-heneicosene and derivatives thereof;
octacyclo[8.8.0.1^{2,9}.1^{4,7}.1^{11,18}.1^{13,16}.0^{3,8}.0^{12,17}]-5-docosene and derivatives thereof;
nonacyclo[10.9.1.1^{4,7}.1^{13,20}.1^{15,18}.0^{2,10}.0^{3,8}.0^{12,21}.0^{14,19}]-5-pentacosene and derivatives thereof; and
nonacyclo[10.10.1.1^{5,8}.1^{14,21}.1^{16,19}.0^{2,11}.0^{4,9}.0^{13,22}. 0^{15,20}]-6-hexacosene and derivatives thereof.

Although examples of the cycloolefins represented by the above formula (I) or (II) employable in the present invention are described above, more specific structures of these compounds are shown in Japanese Patent Application No. 196475/1993, paragraphs 0032 - 0054, by the applicant of the present application, and the compounds exemplified in this publication are also employable as the cycloolefins in the present invention.

The cycloolefins represented by the formula (I) or (II) can be prepared by subjecting cyclopentadienes and olefins of the corresponding structures to Diels-Alder reaction.

These cycloolefins may be used singly or in combination of two or more kinds.

The cycloolefin resin used in the present invention can be prepared using the cycloolefin represented by the formula (I) or (II) in accordance with, for example, processes proposed by the present applicant in Japanese Patent Laid-Open Publications No. 168708/1985, No. 120816/1986, No. 115912/1986, No. 115916/1986, No. 271308/1986, No. 272216/1986, No. 252406/1987 and No. 252407/1987, under the properly selected conditions.

### (A-1) Ethylene/cycloolefin random copolymer

The ethylene/cycloolefin random copolymer (A-1) used in the present invention preferably contains units derived from ethylene in an amount of 10 to 90 % by mol, preferably 30 to 80 % by mol, and contains units derived from the cycloolefin in an amount of 10 to 90 % by mol, preferably 20 to 70 % by mol. The composition ratio between ethylene and the cycloolefin can be measured by ¹³C-NMR.

In the cycloolefin random copolymer used in the present invention, the units derived from ethylene and the units derived from the cycloolefin are arranged at random and linked to each other to form a substantially linear structure. A substantially linear and crosslinked gel-free structure of the copolymer can be confirmed by the fact that no insoluble content is contained in an organic solvent solution of the copolymer.

In the ethylene/cycloolefin random copolymer (A-1), it is considered that the cycloolefins represented by the above formulae (I) or (II) form repeating structural units represented by the following formulae (III) or (IV), respectively.

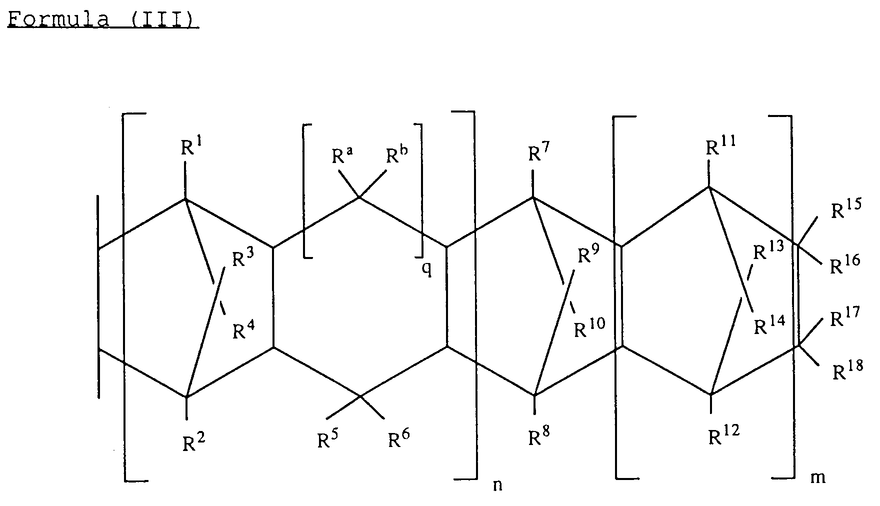

In the above formula (III), m, n, q, R¹ to R¹⁸, R^{a} and R^{b} have the same meaning as in the formula (I).

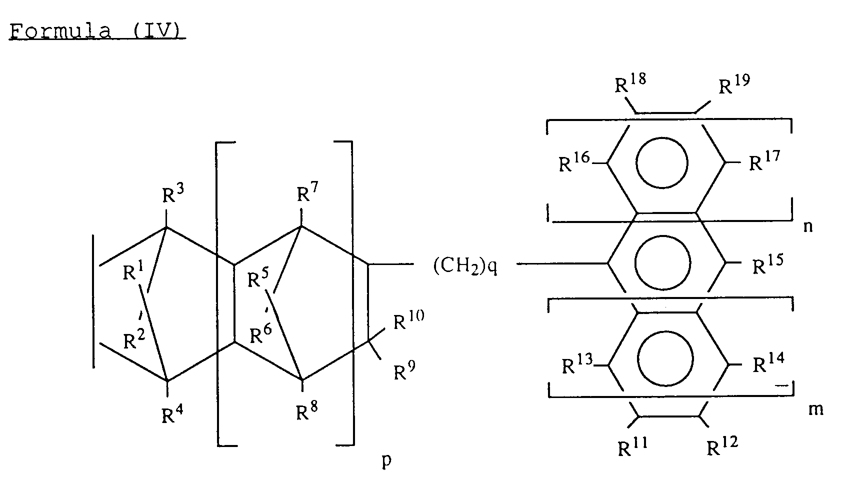

In the above formula (IV), n, m, p, q and R¹ to R¹⁹ have the same meaning as in the formula (II).

The ethylene/cycloolefin random copolymer may further comprise units derived from a copolymerizable monomer other than the above ethylene and cycloolefin in an amount not detrimental to the object of the present invention, generally not greater than 20 mol%, preferably not greater than 10 mol%.

Examples of the above other monomers include:
α-olefins each having 3 to 20 carbon atoms such as propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicocene,
cycloolefins such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene, and
nonconjugated dienes such as 1,4-hexadiene, 4-methyl-1,4-hexadiene, 5-methyl-1,4-hexadiene, 1,7-octadiene, dicyclopentadiene and 5-vinyl-2-norbornene.

The above other monomers can be used either individually or in combination.

The ethylene/cycloolefin random copolymer (A-1) used in the present invention can be prepared by the processes described in the above publications using ethylene and the cycloolefin represented by the formula (I) or (II). Above all, it is preferred to prepare the ethylene-cycloolefin random copolymer (A-1) by the process in which the copolymerization is conducted in a hydrocarbon solvent and a catalyst formed from a vanadium compound soluble in the hydrocarbon solvent and an organoaluminum compound is used.

In the copolymerization reaction, a Group IVB metallocene solid catalyst is also employable. The Group IVB metallocene solid catalyst is a catalyst comprising a transition metal compound containing a ligand having a cyclopentadienyl skeleton, an organoaluminum oxy-compound and an optionally added organoaluminum compound. The Group IVB transition metal is zirconium, titanium or hafnium, and this transition metal has at least one ligand having a cyclopentadienyl skeleton.

Examples of the ligands having a cyclopentadienyl skeleton include cyclopentadienyl group, indenyl group, tetrahydroindenyl group and fluorenyl group which may be substituted with an alkyl group. These groups may be linked through other groups such as alkylene group. The ligand other than the ligand having a cyclopentadienyl skeleton is, for example, alkyl group, cycloalkyl group, aryl group or aralkyl group.

As the organoaluminum oxy-compound and the organoaluminum compound, those generally used for preparing olefin resins are employable. The Group IVB metallocene solid catalyst is described in detail in, for example, Japanese Patent Laid-Open Publications No. 221206/1986, No. 106/1989 and No. 173112/1990.

### (A-2) Ring-Opening (Co)polymer of Cycloolefin

In the ring-opening polymer or copolymer of the above cycloolefin, it is considered that at least parts of the cycloolefins represented by the above formulae (I) or (II) form repeating structural units represented by the following formulae (V) or (VI), respectively.

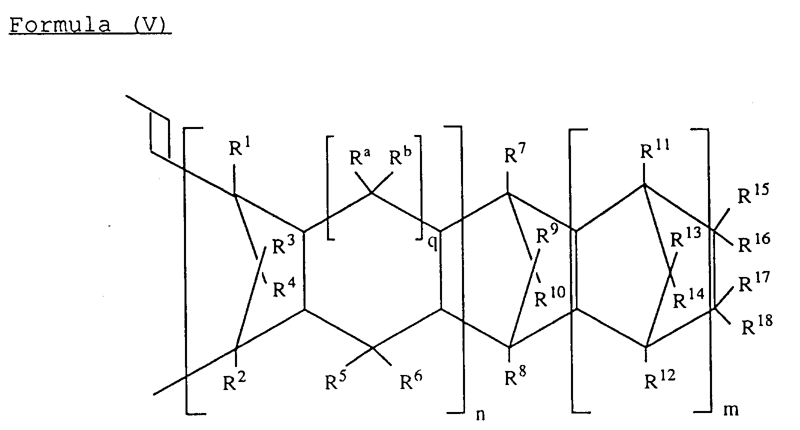

In the above formula (V), n, m, q, R¹ to R¹⁸, R^{a} and R^{b} have the same meaning as in the formula (I).

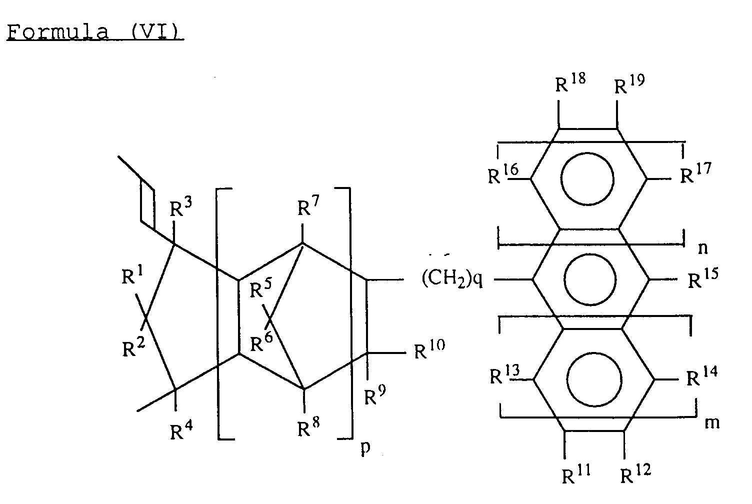

In the above formula (VI), n, m, p, q and R¹ to R¹⁹ have the same meaning as in the formula (II).

The above ring-opening polymer or copolymer can be produced by any of the processes disclosed in the above publications. It can be produced by polymerizing or copolymerizing the cycloolefin represented by the above formula (I) or (II) in the presence of a ring-opening polymerization catalyst.

Examples of suitably employed ring-opening polymerization catalysts include:
a catalyst composed of a halide, nitrate or acetylacetonate of a metal such as ruthenium, rhodium, palladium, osmium, indium or platinum and a reducing agent, and
a catalyst composed of a halide or acetylacetonate of a metal such as titanium, palladium, zirconium or molybdenum and an organoaluminum compound.

### (A-3) Hydrogenation Product of Ring-Opening (Co)polymer

The hydrogenation product of the ring-opening (co)polymer can be obtained by hydrogenating the abode ring-opening (co)polymer in the presence of any of conventional hydrogenation catalysts.

In the above hydrogenation product (A-3) of the ring-opening (co)polymer, it is considered that at least parts of the cycloolefins represented by the above formulae (I) or (II) form repeating structural units represented by the following formulae (VII) or (VIII), respectively.

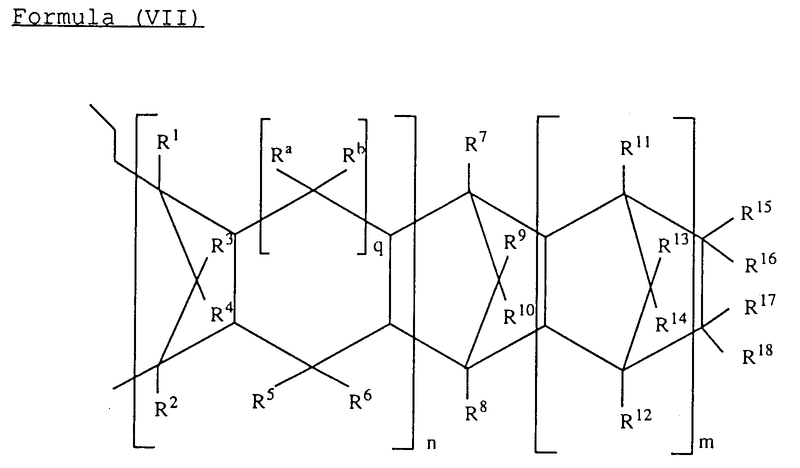

In the above formula (VII), n, m, q, R¹ to R¹⁸, R^{a} and R^{b} have the same meaning as in the formula (I).

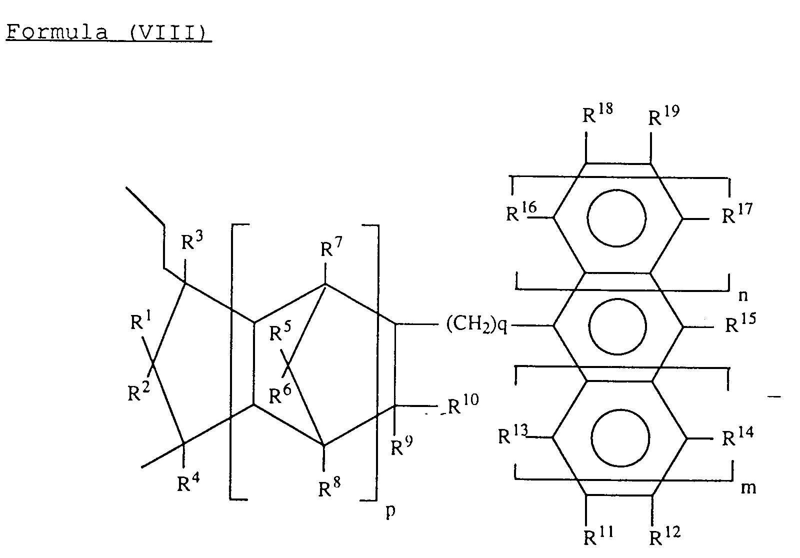

In the above formula (VIII), n, m, p, q and R¹ to R¹⁹ have the same meaning as in the formula (II).

### (A-4) Graft Modification Product

The graft modification product of the cycloolefin resin (A-4) is a graft modification product of (A-1) the ethylene/cycloolefin random copolymer, (A-2) the ring-opening polymer or copolymer of the cycloolefin or (A-3) the hydrogenation product of the ring-opening polymer or copolymer.

As the modifiers, unsaturated carboxylic acids and the derivatives thereof are generally used.

Examples of the unsaturated carboxylic acids include (meth)acrylic acid, maleic acid, fumaric acid, tetrahydrophthalic acid, itaconic acid, citraconic acid, crotonic acid, isocrotonic acid and endocisbicyclo[2,2,1]hept-5-ene-2,3-dicarboxylic acid (nadic acid™).

Examples of derivatives of the unsaturated carboxylic acids include unsaturated carboxylic acid anhydrides, unsaturated carboxylic acid halides, unsaturated carboxylic acid amides, unsaturated carboxylic acid imides and ester compounds of the unsaturated carboxylic acids. Specific examples of derivatives of the unsaturated carboxylic acid include maleic anhydride, citraconic anhydride, malenyl chloride, maleimide, monomethyl maleate, dimethyl maleate and glycidyl maleate.

Of the above modifiers, preferably used are α,β-unsaturated dicarboxylic acids and α,β-unsaturated dicarboxylic acid anhydrides, e.g., maleic acid, nadic acid and anhydrides of these acids. The modifiers may be used in combination of two or more kinds.

For obtaining the graft modification product of the cycloolefin resin from the cycloolefin resin and the modifier, various modification methods of polymers conventionally known can be adopted. For example, the graft modification product can be obtained by a method of adding the modifier to a molten cycloolefin resin so as to perform graft polymerization (reaction) or a method of adding the modifier to a solvent solution of the cycloolefin resin so as to perform graft reaction.

The graft reaction is carried out at a temperature of usually 60 to 350 °C. The graft reaction may be carried out in the presence of radical initiators such as organic peroxides or azo compounds.

It is desired that the modification ratio in the graft modification product of the cycloolefin resin used in the present invention is usually not more than 10 % by mol.

The modification product having a modification ratio within the above range can be obtained by directly adding the modifier to the cyloolefin resin, and then graft polymerizing them, or it can be obtained by preliminary preparing a modified product having a high modification ratio by graft polymerization of the cycloolefin and the modifier and then diluting the modified product with the unmodified cycloolefin resin.

In the present invention, the above components (A-1), (A-2), (A-3) and (A-4) may be used singly or in combination as the cycloolefin resin (A). Of these, the ethylene-cycloolefin random copolymer (A-1) is preferably employed.

### (B) Aromatic Vinyl/conjugated Diene Block Copolymer And/Or Hydrogenation Product Thereof

In the present invention, an aromatic vinyl/conjugated diene block copolymer and/or hydrogenation product thereof having a specific number average molecular weight of 75,000 to 500,000 is used.

The aromatic vinyl for forming the aromatic vinyl/conjugated diene block copolymer and hydrogenation product thereof is, for example, styrene, α-methylstyrene or p-methylstyrene.

The conjugated diene is, for example, butadiene, isoprene, pentadiene or 2,3-dimethylbutadiene.

In the aromatic vinyl/conjugated diene block copolymer and/or hydrogenation product thereof (B) used in the present invention, the units derived from the aromatic vinyl are contained in an amount of 5 to 80 % by weight, preferably 15 to 70 % by weight, more preferably 40 to 70 % by weight. Especially from the aromatic vinyl/conjugated diene block copolymer and/or hydrogenation product thereof (B) containing the units derived from the aromatic vinyl in an amount of 40 to 70 % by weight, a cycloolefin resin composition excellent in transparency can be obtained.

The amount of units derived from the aromatic vinyl is measured by conventional methods, such as an infrared spectrophotometry and an NMR spectrometry.

Examples of the aromatic vinyl/conjugated diene block copolymer and the hydrogenation product thereof include styrene/butadiene block copolymer (SB) and hydrogenated product thereof (SEB); styrene/butadiene/styrene block copolymer (SBS) and hydrogenation product thereof (SEBS: styrene/(ethylene/butylene)/styrene block copolymer); styrene/isoprene block copolymer (SI) and hydrogenation product thereof (SEP); styrene/isoprene/styrene block copolymer (SIS) and hydrogenation product thereof (SEPS: styrene/(ethylene/propylene)/styrene block copolymer); and the like.

Specific example of the component (B) include Kraton G1650, G1652, G1657, G1701 (available from Shell Kagaku K.K.) and Tuftec (available from Asahi Chemical Industry Co., Ltd.), all being SEBS.

In the present invention, as the component (B), particularly preferred are SEBS (hydrogenated SBS) and SEPS (hydrogenated SIS).

The aromatic vinyl/conjugated diene block copolymer and hydrogenation product thereof (B) used in the present invention are thermoplastic elastomers composed of the aromatic vinyl block units and the conjugated diene rubber block units (or the hydrogenation rubber block units thereof). In the block copolymers, the aromatic vinyl block units which are hard segments exist as crosslinking points of the rubber block units which are soft segments, to thereby form a physically crosslinked structure (domain).

In the present invention, the aromatic vinyl/conjugated diene block copolymer and/or hydrogenation product thereof (B) having a specific molecular weight is used as described above, and the number average molecular weight (Mn) thereof is in the range of 75,000 to 500,000, preferably 80,000 to 300,000, more preferably 90,000 to 200,000.

The number average molecular weight (Mn) of the component (B) can be determined by gel permeation chromatography (GPC, o-dichlorobenzene, 140 °C).

When the cycloolefin resin composition of the present invention is subjected to press molding as described below, the number average molecular weight of the component (B) may be in the range of 50,000 to 500,000.

The cycloolefin resin composition of the present invention comprises the aromatic vinyl/conjugated diene block copolymer and/or hydrogenation product thereof (B) having a number average molecular weight within the above range and the cycloolefin resin (A), so that it is excellent particularly in the impact resistance.

### Cycloolefin Resin Composition And Molded Product Thereof

The cycloolefin resin composition according to the present invention comprises:
60 to 90 parts by weight, preferably 70 to 90 parts by weight of the above cycloolefin resin (A), and
10 to 40 parts by weight, preferably 10 to 30 parts by weight of the aromatic vinyl/conjugated diene block copolymer and/or hydrogenation product thereof (B) having a specific molecular weight.

The cycloolefin resin composition of the present invention can be obtained by various processes, for example, a process comprising melt kneading the components (A) and (B) by means of a known kneading apparatus such as an extruder or Banbury mixer, a process comprising dissolving the components (A) and (B) in a common solvent and then evaporating the solvent, or a process comprising adding a solution of the components (A) and (B) to a poor solvent to perform precipitation.

The cycloolefin resin composition of the present invention may further contain other additives, such as dye, pigment, stabilizer, plasticizer, antistatic agent, ultraviolet light absorber, antioxidant, lubricant and filler in amounts not detrimental to the object of the present invention.

The cycloolefin resin composition formed from the components (A) and (B) is excellent in not only impact resistance but also in moisture resistance.

Further, the cycloolefin resin composition of the present invention is excellent also in heat resistance, heat aging resistance, chemical resistance, solvent resistance, dielectric properties, rigidity, transparency, tear properties, dead fold properties and vacuum or pressure forming properties, so that the composition exerts satisfactory performance when used as a packaging material for drugs and foods. Therefore, the cycloolefin resin composition of the present invention can favorably be used for forming packaging sheets, packaging films and various containers such as bottles.

The molded product according to the present invention can be obtained by molding the above-described cycloolefin resin composition by various methods, and the shape thereof is not specifically limited.

Examples of the methods for molding the cycloolefin resin composition include extrusion molding such as T-die method and inflation method, blow molding such as direct blow molding and injection blow molding, press molding, injection molding and stamping.

The cycloolefin resin composition of the present invention can form composite laminates together with other materials. For example, a laminate can be formed by coating the composition on a layer of vinylidene chloride, or a multi-layer laminate can be formed by laminating a layer of the composition and layers of polyamide, ethylene-vinyl alcohol copolymer, polyester, polyolefin (e.g., polypropylene, polyethylene), etc.

For forming such laminates including other resin layers, there can be adopted co-extrusion molding such as multi-layer T-die method, multi-layer inflation method and extrusion lamination; ordinary multi-layer sheet-forming or film-forming method such as wet lamination, dry lamination and press molding; blow molding such as multi-layer injection blow molding (e.g., co-injection blow molding) and multi-layer direct blow molding; sandwich molding; injection molding such as two-color molding; and stamping.

The multi-layer laminate thus formed can be used in the unstretched state or after monoaxially stretched or biaxially oriented.

When the molded product of the cycloolefin resin composition according to the present invention is a packaging material, the packaging material can be used for packaging any materials such as drugs, foods, daily necessaries and miscellaneous goods. In particular, because of its excellent moisture resistance, transparency and impact resistance, the molded product can favorably be used for packaging particularly solid medicines such as tablet, capsule and powder medicines, liquid medicines, foods such as rice cracker, snacks and cookies, and hygroscopic materials such as cigarette and tea.

Examples of the packages include bag, pack, PTP (press through pack), blister pack, twist-wrapping film, wrapping film, shrink film, easy-peel film, containers made up of molded sheets, such as tetra pack and milk pack, medical containers, such as medicine bottle, vial, liquid-transportation bottle and syringe dyalyzer (e.g., prefilled syringe), physical and chemical appliances, such as laboratory dish, test tube and analytical cell, and cosmetic bottle.

Particularly, the multi-layer laminates formed from the cycloolefin resin composition of the present invention are suitable for medical containers such as vial and eyedropper, PTP (press through pack), blister pack, and packaging materials such as food packaging films.

The molded product of the present invention is excellent in impact strength and moisture resistance. In more detail, the Izod impact strength (ASTM D790, 23 °C, notched) of the molded product is desired to be not less than 7 kg·cm/cm, preferably not less than 10 kg·cm/cm, and the moisture permeation coefficient of the injection molded product is desired to be not more than 0.3, preferably not more than 0.2.

Especially when the molded product of the present invention is a press molded product, it can be confirmed through observation of the micro-structure by an electron microscope that the component (B) is more particulate (not flat) and dispersed in the component (A), as compared with the injection molded product. The molded product having such structure can show particularly high impact strength.

### EFFECT OF THE INVENTION

The cycloolefin resin composition according to the present invention is excellent in impact strength and moisutre resistance, and the composition can be widely used for various molded products.

### EXAMPLE

The present invention will be further described with reference to the following examples, but it should be construed that the invention is in no way limited to those examples.

In the examples, the properties were measured in accordance with the following methods.

### (1) Softening temperature (TMA)

The softening temperature was determined by heat distortion behavior of a sheet having a thickness of 1 mm by means of a Thermal Mechanical Analyzer (manufactured by Du Pont Co.). That is, a quartz needle was placed on the sheet, and the sheet was heated at a rate of 5 °C/min under a load of 49 g. The temperature at which the needle penetrated into the sheet by 0.635 mm was taken as the softening temperature (TMA).

### (2) Izod (IZ) impact strength (notched)

The Izod impact strength was measured in accordance with ASTM D790 at 23 °C using an injection-molded specimen having a thickness of 1/8 inch.

### (3) Moisture permeation coefficient

The moisture permeation coefficient was measured by means of a PERMARTRAN-W600 type moisture permeability measuring apparatus (manufactured by Mocon Co.) under the conditions of a temperature of 40 °C and a relative humidity of 90 %.

### (4) Tensile test

The tensile test was carried out in accordance with ASTM D638 at 23 °C using an ASTM type IV dumbbell specimen, to measure tensile strength, tensile elongation at break and tensile modulus.

### (5) Flexural test

The flexural test was carried out in accordance with ASTM D790 using an injection-molded specimen having a thickness of 1/8 inch under the conditions of a temperature of 23 °C and a cross-head speed of 20 mm/min, to measure flexural modulus and flexural strength.

### (6) Film impact

A specimen having a size of 100 mm × 100 mm was cut from the molded product, and the film impact of the specimen was measured at 23 °C by means of a film impact tester (manufactured by Toyo Seiki K.K.) (hammer head diameter: 1/2 inch).

### (7) Haze

The haze was measured in accordance with ASTM D1003.

### (8) Blown bottle drop impact test

A blown bottle filled with water was dropped from the estimated height at crack (break). Considering whether the bottle was cracked or not, the next bottle was dropped from the height higher or lower by 30 cm or 10 cm than the previous height. Thus, 30 bottles were dropped to seek a height at which 50 % bottles were cracked (height at 50 % break).

The components used for preparing the compositions in the following examples are described below.
(A) Cycloolefin resin
   Et·TCD: Random copolymer of ethylene and tetracyclo[4.4.0.1^{2,5}.1^{7,10}]dodecene-3(TCD)
   TMA and MFR of this copolymer are shown in the tables.
(B) Aromatic vinyl/conjugated diene block copolymer and/or hydrogenation product thereof
   SEPS: Styrene-ethylene/propylene-styrene block copolymer
   SEBS: Styrene-ethylene/butene-styrene block copolymer

### Examples 1 - 8

### Preparation of Cycloolefin Resin Composition

To the sum of 100 parts by weight of the cycloolefin resin (A) and the aromatic vinyl/conjugated diene block copolymer and/or hydrogenation product thereof (B) in the amounts shown in the tables was added 0.1 part by weight of tetrakis[methylene-3(3,5-di-t-butyl-4-hydroxyphenyl)propionate]methane, and they are sufficiently mixed.

Then, the mixture was fed to a twin-screw extruder having a cylinder temperature of 250 °C and melt kneaded to obtain a cycloolefin resin composition.

### Injection-molded product

The cycloolefin resin composition shown in Table 1, which was obtained as above, was molded by means of IS-55EPN injection molding machine (manufactured by Toshiba Kikai K.K.), and the molded product (specimen) was measured on the IZ impact strength and the moisture permeation coefficient.

The results are set forth in Table 1.

### Comparative Examples 1 - 5

The cycloolefin resin composition shown in Table 1, which was obtained in a manner similar to that of Example 1, was injection molded in the same manner as in Example 1. The resulting molded product (specimen) was measured on the IZ impact strength and the moisture permeation coefficient.

The results are set forth in Table 1.

**Table 1 (I)**

| | Ex. 1 | Ex. 2 | Ex. 3 | Ex. 4 | Ex. 5 | Ex. 6 |
|---|---|---|---|---|---|---|
| (A) | | | | | | |
| Cycloolefin random copolymer | Et·TCD | Et·TCD | Et·TCD | Et·TCD | Et·TCD | Et·TCD |
| Softening temperature TMA (°C) | 90 | 90 | 90 | 90 | 90 | 90 |
| MFR (g/10 min) | 30 | 30 | 30 | 30 | 30 | 30 |
| Amount (wt.%) | 80 | 80 | 80 | 80 | 80 | 62 |

| (B) | | | | | | |
|---|---|---|---|---|---|---|
| Styrene block copolymer | SEPS | SEPS | SEPS | SEPS | SEPS | SEPS |
| Styrene component content (wt.%) | 40 | 40 | 50 | 50 | 62 | 40 |
| Number average molecular weight (Mn) | 89,000 | 176,000 | 76,000 | 118,000 | 85,000 | 89,000 |
| Amount (wt.%) | 20 | 20 | 20 | 20 | 20 | 38 |
| IZ impact strength (23°C notched) (kg·cm·cm) | 58 | 780 | 35 | 61 | 25 | 780 |
| Flexural strength (kg/cm²) | 580 | 610 | 690 | 680 | 800 | 550 |
| Flexural modulus (kg·cm²) | 17,100 | 17,700 | 18,800 | 19,100 | 21,000 | 16,200 |
| Haze (%) (2 mm thick) | 40 | 45 | 25 | 25 | 3 | 45 |
| Moisture permeation coefficient (g·mm/m²·24 hr) | 0.15 | 0.15 | 0.15 | 0.15 | 0.15 | 0.25 |

**Table 1 (II)**

| | Comp.Ex. 1 | Comp.Ex. 2 | Comp.Ex. 3 | Comp.Ex. 4 |
|---|---|---|---|---|
| (A) | | | | |
| Cycloolefin random copolymer | Et·TCD | Et·TCD | Et·TCD | Et·TCD |
| Softening temperature TMA (°C) | 90 | 90 | 90 | 90 |
| MFR (g/10 min) | 30 | 30 | 30 | 30 |
| Amount (wt.%) | 80 | 80 | 96 | 57 |

| (B) | | | | |
|---|---|---|---|---|
| Styrene block copolymer | SEPS | SEPS | SEPS | SEPS |
| Styrene component content (wt.%) | 40 | 50 | 40 | 40 |
| Number average molecular weight (Mn) | 73,000 | 73,000 | 89,000 | 89,000 |
| Amount (wt.%) | 20 | 20 | 4 | 43 |
| IZ impact strength (23°C notched) (kg·cm/cm) | 4 | 4 | 3 | 780 |
| Flexural strength (kg/cm²) | 680 | 740 | 820 | 500 |
| Flexural modulus (kg·cm²) | 18,000 | 19,500 | 23,300 | 15,500 |
| Haze (%) (2 mm thick) | 44 | 42 | 8 | 50 |
| Moisture permeation coefficient (g·mm/m²·24 hr) | 0.15 | 0.15 | 0.15 | 0.40 |

**Table 1 (III)**

| | Ex. 7 | Ex. 8 | Comp. Ex. 5 |
|---|---|---|---|
| (A) | | | |
| Cycloolefin random copolymer | Et·TCD | Et·TCD | Et·TCD |
| Softening temperature TMA (°C) | 90 | 90 | 90 |
| MFR (g/10 min) | 30 | 30 | 30 |
| Amount (wt.%) | 80 | 80 | 80 |

| (B) | | | |
|---|---|---|---|
| Styrene block copolymer | SEBS | SEBS | SEBS |
| Styrene component content (wt.%) | 40 | 62 | 62 |
| Number average molecular weight (Mn) | 90,000 | 80,000 | 73,000 |
| Amount (wt.%) | 20 | 20 | 20 |
| IZ impact strength (23°C, notched) (kg·cm/cm) | 55 | 25 | 5 |
| Flexural strength (kg/cm²) | 810 | 850 | 810 |
| Flexural modulus (kg/cm²) | 20,900 | 21,100 | 21,100 |
| Haze (%)(2 mm thick) | 40 | 4 | 3 |
| Moisture permeation coefficient (g·mm/m²·24hr) | 0.15 | 0.15 | 0.15 |

### Example 9

The cycloolefin resin composition shown in Table 2, which was obtained in a manner similar to that of Example 1, was fed to a single-screw extruder (diameter: 30 mm) having a cylinder temperature of 230 °C, and the composition was T-die molded into a sheet having a thickness of 100 µm.

The properties of the sheet are set forth in Table 2.

### Comparative Example 6

The cycloolefin resin composition shown in Table 2, which was obtained in a manner similar to that of Example 1, was molded into a sheet in the same manner as in Example 9. The results are set forth in Table 2.

**Table 2**

| | Ex. 9 | Comp.Ex. 6 |
|---|---|---|
| (A) | | |
| Cycloolefin random copolymer | Et·TCD | Et·TCD |
| Softening temperature TMA (°C) | 90 | 90 |
| MFR (g/10 min) | 30 | 30 |
| Amount (wt.%) | 80 | 80 |

| (B) | | |
|---|---|---|
| Styrene block copolymer | SEPS | SEPS |
| Styrene component content (wt.%) | 62 | 62 |
| Number average molecular weight (Mn) | 85,000 | 73,000 |
| Amount (wt.%) | 20 | 20 |
| Tensile strength (lengthwise/crosswise) | 380/360 | 370/370 |
| Tensile elongation at break (%) | 50/70 | 10/8 |
| Tensile modulus (kg/cm) | 21000/20000 | 21000/20000 |
| Film impact (kg·cm/cm) | 1700 | 100 |
| Haze (%) | 0.1 | 0.1 |

### Example 10

The cycloolefin resin composition shown in Table 3, which was obtained in a manner similar to that of Example 1, was molded into a vial of the following size by means of an injection blow molding machine. The vial was measured on the drop strength. The result is set forth in Table 3.
Height: 65 mm
Body diameter: 30 mm
Body thickness: 1.3 mm
Bottom thickness: 1.5 mm
Internal volume: 31 ml

### Comparative Example 7

The cycloolefin resin composition shown in Table 3 was molded into a vial in the same manner as in Example 10. The result is set forth in Table 3.

**Table 3**

| | Ex. 10 | Comp.Ex. 7 |
|---|---|---|
| (A) | | |
| Cycloolefin random copolymer | Et·TCD | Et·TCD |
| Softening temperature TMA (°C) | 90 | 90 |
| MFR (g/10 min) | 30 | 30 |
| Amount (wt.%) | 80 | 80 |

| (B) | | |
|---|---|---|
| Styrene block copolymer | SEPS | SEPS |
| Styrene component content (wt.%) | 40 | 40 |
| Number average molecular weight (Mn) | 89,000 | 73,000 |
| Amount (wt.%) | 20 | 20 |
| Blown bottle drop strength (height at 50 % break)(cm) | 200 | 65 |

### Example 11

The cycloolefin resin composition shown in Table 4, which was prepared in a manner similar to that of Example 1, was press molded under the conditions of a temperature of 250 °C and a pressure of 200 kg/cm². The results are set forth in Table 4.

### Comparative Example 8

The cycloolefin resin composition shown in Table 4, which was prepared in a manner similar to that of Example 1, was injection molded under the same conditions as in Example 1. The results are set forth in Table 4.

**Table 4**

| | Ex. 11 | Comp.Ex. 8 |
|---|---|---|
| (A) | | |
| Cycloolefin random copolymer | Et·TCD | Et·TCD |
| Softening temperature TMA (°C) | 90 | 90 |
| MFR (g/10 min) | 30 | 30 |
| Amount (wt.%) | 80 | 80 |

| (B) | | |
|---|---|---|
| Styrene block copolymer | SEPS | SEPS |
| Styrene component content (wt.%) | 61 | 61 |
| Number average molecular weight (Mn) | 65,000 | 65,000 |
| Amount (wt.%) | 20 | 20 |
| Molding method | press molding | injection molding |
| IZ impact strength (23°C, notched) (kg·cm/cm) | 50 | 3 |
| Flexural strength (kg/cm²) | 800 | 800 |
| Flexural modulus (kg/cm²) | 21,000 | 21,000 |
| Haze (%) (2 mm thick) | 4 | 4 |
| Moisture permeation coefficient (g·mm/m²·24hr) | 0.15 | 0.15 |

## Claims

1. A cycloolefin resin composition comprising:
(A) 60 to 90 parts by weight of at least one cycloolefin resin selected from the group consisting of:
(A-1) an ethylene/cycloolefin random copolymer of ethylene and a cycloolefin represented by the following formula (I) or (II),
(A-2) a ring-opening (co)polymer of a cycloolefin represented by the following formula (I) or (II),
(A-3) a hydrogenation product of the above (A-2), and
(A-4) a graft modification product of the above (A-1), (A-2) or (A-3); and
(B) 10 to 40 parts by weight of an aromatic vinyl/conjugated diene block copolymer and/or a hydrogenation product thereof having a number average molecular weight of 75,000 to 500,000: 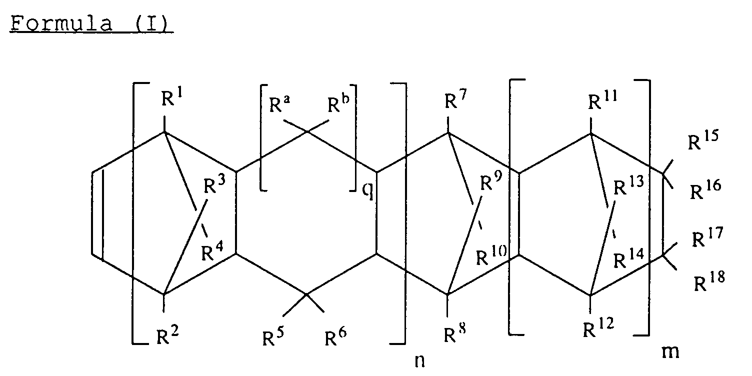 wherein n is 0 or 1, m is 0 or a positive integer, q is 0 or 1 and each of R¹ to R¹⁸, R^{a} and R^{b} independently represents a hydrogen atom, a halogen atom or a hydrocarbon group which may be substituted with halogen atoms, provided that R¹⁵ to R¹⁸ may mutually bond to form a monocyclic or polycyclic ring which may have a double bond, and that a combination of R¹⁵ and R¹⁶ or a combination of R¹⁷ and R¹⁸ may form an alkylidene group; or 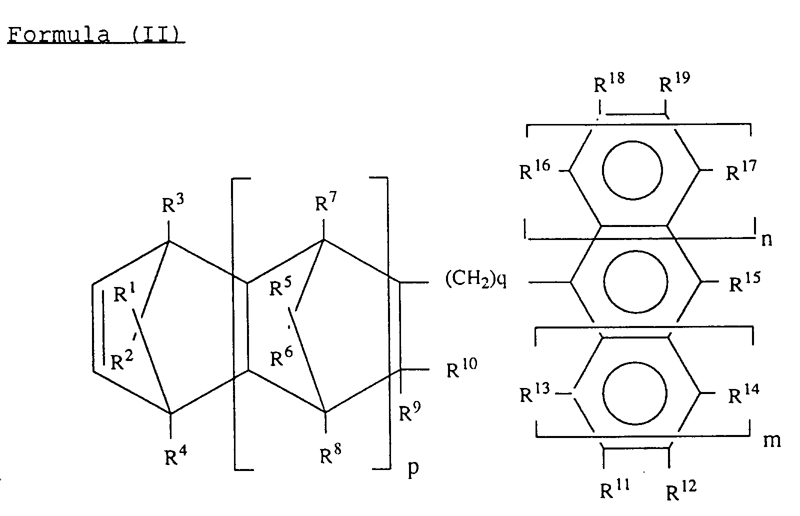 wherein each of p and q is 0 or an integer of 1 or greater, each of m and n is 0, 1 or 2 and each of R¹ to R¹⁹ independently represents a hydrogen atom, a halogen atom, a hydrocarbon group which may be substituted with halogen atoms or an alkoxy group which may be substituted with halogen atoms, provided that a carbon atom with which R⁹ or R¹⁰ bonds and either a carbon atom with which R¹³ bonds or a carbon atom with which R¹¹ bonds may bond with each other directly or through an alkylene group having 1 to 3 carbon atoms and that, when n = m = 0, a combination of R¹⁵ and R¹² or a combination of R¹⁵ and R¹⁹ may mutually bond to form an aromatic monocyclic ring or aromatic polycyclic rings.

2. The composition according to claim 1, wherein the aromatic vinyl/conjugated diene block copolymer and/or hydrogenation product thereof (B) is a styrene-ethylene/propylene-styrene block copolymer or a styrene-ethylene/butene-styrene block copolymer.

3. The composition according to claim 1, wherein the aromatic vinyl/conjugated diene block copolymer and/or hydrogenation product thereof (B) has a number average molecular weight of 90,000 to 200,000.

4. A molded article formed from the composition according to any one of claims 1 to 3.

5. A molded article obtained by press molding of a cycloolefin resin composition comprising 60 to 90 parts by weight of the cycloolefin resin (A) according to claim 1 and 10 to 40 parts by weight of an aromatic vinyl/conjugated diene block copolymer and/or a hydrogenation product thereof (B) having a number average molecular weight of 50,000 to 500,000.
